# EUROPÄISCHE PATENTSCHRIFT

(11) **EP 0 477 864 B1**
(45) Veröffentlichungstag und Bekanntmachung des Hinweises auf die Patenterteilung: **02.02.1994**
(21) Anmeldenummer: 91116244.4
(22) Anmeldetag: 24.09.1991
(51) Int. Cl.: H01S 3/03, H01S 3/038

(54) **Slab- oder Bandleiterlaser**
Slab or strip guide laser
Laser à guide d'onde en forme de "Slab" ou en forme de bande

(30) Priorität: 26.09.1990 DE 4030443
(43) Veröffentlichungstag der Anmeldung: 01.04.1992
(73) Patentinhaber: SIEMENS AKTIENGESELLSCHAFT, 80333 München (DE)
(72) Erfinder: Krüger, Hans, Dipl.-Phys., W-8000 München 83 (DE); Kirschner, Walter, W-8043 Unterföhring (DE)

(56) Entgegenhaltungen:
- EP-A- 0 305 893
- US-A- 4 713 825
- US-A- 4 719 639
- PATENT ABSTRACTS OF JAPAN, Bd. 12, Nr. 69 (E-587)(2916) 3. März 1988 & JP-A-62 210 685
- TECHNISCHE RUNDSCHAU, Bd. 82, Nr. 38, 21. September 1990, Seite 10; ANNONYME: 'neuartiger diffusions gekühlter CO2 kompakt laser'

## Beschreibung

Die vorliegende Erfindung betrifft einen Slab- oder Bandleiterlaser gemäß dem Oberbegriff des Patentanspruchs 1. Ein derartiger Bandleiterlaser ist aus der DE-OS 37 29 053 bekannt. Dort reichen beide Elektroden unmittelbar an den Spiegel heran, die elektrische Isolation zwischen den beiden Elektroden stellt der Spiegel selbst dar. Dadurch bedingt ist die Wärmeableitung im Spiegel und damit die erzielbare Leistung des Lasers begrenzt.

Aus der US-PS 47 13 825 ist es bekannt, einen CO₂-Wellenleiterlaser mit einer optischen Bank aus "Invar"-Stäben auszurüsten und an dieser die Laserspiegel zu befestigen. Dieser Aufbau erfordert Justiereinrichtungen für die Laserspiegel und einen Mindestabstand der Spiegel vom Wellenleiter, um für die Temperaturausdehnung des Wellenleiters Raum zu geben.

Die Aufgabe, die der vorliegenden Erfindung zugrundeliegt, besteht in einer Erhöhung der spezifischen Leistung, d.h. der Leistung pro Volumen eines Bandleiterlasers in Verbindung mit einem kompakten, wenig aufwendigen Aufbau. Diese Aufgabe wird bei einem Laser gemäß dem Oberbegriff durch die kennzeichnenden Merkmale des Patentanspruchs 1 gelöst.

Beim erfindungsgemäßen Aufbau ist nur die erste Elektrode nach außen abgestützt bzw. gehaltert. Die zweite Elektrode und die Spiegel sind nur auf der ersten Elektrode abgestützt. Dieser Aufbau macht Spannungen, die aufgrund der Halterung auf die Elektroden übertragen werden können, unschädlich. Er verhindert eine unterschiedliche Verformung der beiden Elektroden durch äußere Spannungen. Dabei ist vorteilhaft zumindest ein Spiegel auf die erste Elektrode aufgeklebt oder durch eine Halteeinrichtung festgeklemmt oder auf die erste Elektrode aufgelötet. Der zweite Spiegel kann ebenfalls auf eine der genannten Arten befestigt sein, die nicht unbedingt dieselbe sein muß, wie beim ersten Spiegel. Die angegebenen Befestigungsarten der Spiegel ermöglichen eine sehr genaue Lagejustierung vor der Befestigung, die dann erhalten bleibt. Die erste Elektrode ist so formstabil ausgeführt, daß auch bei Temperaturschwankungen während des Betriebes des Lasers kein unzulässiges Auswandern des Laserstrahles und keine dadurch bedingte unzulässige Abschwächung der Laserleistung erfolgt. Die Spiegel können bis auf den zur elektrischen Isolation erforderlichen Mindestabstand an die zweite Elektrode angenähert werden. Dieser Aufbau vermeidet Verluste durch Strahldivergenz der Laserstrahlung im Bereich der ersten Elektrode vollständig und minimiert sie im Bereich der zweiten Elektrode. Dies ergibt eine beträchtliche Erhöhung der Laserleistung pro Volumen.

Eine vorteilhafte Ausführungsform eines erfindungsgemäßen Lasers hat die Merkmale, daß die erste Elektrode im wesentlichen den Querschnitt eines U-Profils besitzt, daß der an die Symmetrieebene angrenzende Teil des Profils eine Erhebung an der Außenwand des U-Profils bildet, daß im Bereich dieser Erhebung Kühlkanäle untergebracht sind und daß außerhalb der Kühlkanäle im Bereich der Stirnseite des Lasers Anschlußkanäle für das zur Kühlung der zweiten Elektrode bestimmte Kühlmittel angeordnet sind. Das U-Profil mit einer Erhebung im Mittelbereich gewährleistet eine besonders hohe Steifigkeit im Entladungsspalt, ermöglicht die Unterbringung von Anschlüssen für das Kühlmittel der zweiten Elektrode, ohne daß eine störende Verbiegung über die Kühlmittelanschlüsse hervorgerufen wird. Außerdem kann diese Ausführungsform besonders kompakt gestaltet werden, indem das U-Profil gleichzeitig als Teil des Lasergehäuses dient.

Vorteilhaft sind die Kühlmitteleinläufe für beide Elektroden auf einer Seite und die Kühlmittelausläufe für beide Elektroden auf der anderen Seite der Symmetrieebene des U-Profils angeordnet. Diese Ausführungsform ist auch bei den beim Betrieb auftretenden Temperaturunterschieden in den Elektroden besonders arm an mechanischen Verspannungen im U-Profil.

Eine weitere Steigerung der Verzugsfreiheit des Lasers ist gegeben, indem die zweite Elektrode mit der ersten über Abstandsstücke aus Isolierstoff mechanisch verbunden und im gewünschten Abstand gehalten ist, indem die erste Elektrode in Strahlrichtung des Lasers länger ausgebildet ist als die zweite Elektrode, indem die Spiegel in Strahlrichtung außerhalb der zweiten Elektrode und von ihr elektrisch isoliert auf der ersten Elektrode angeordnet sind, indem die Spiegel aus Metall bestehen und dicker ausgebildet sind, als die Spaltbreite des Entladungsspaltes. Insbesondere empfiehlt es sich, daß die Spaltbreite unter 2mm und die Dicke der Spiegel zumindest etwa 5mm beträgt und daß die Spiegel aus reinem Kupfer bestehen. Diese Ausführungsform gewährleistet einen gleichmäßigen Abtransport der im Spiegel entstehenden Wärme, ohne daß ein Verzug der Spiegel auftritt. Hierzu trägt die relativ hohe Dicke der Spiegel bei, auch wenn die Spiegel nur einseitig mit einer als Wärmesenke dienenden Elektrode verbunden sind.

Ein Ausgleich von Spannungen bei Temperaturänderungen ist gewährleistet, indem das Flächenträgheitsmoment der beiden Elektroden bezogen auf den Entladungsspalt gleichgroß ist und indem der Abstand der Kühlkanäle von der dem Entladungsspalt zugewandten Fläche jeder Elektrode gleichgroß ist. Zur weiteren Reduktion von mechanischen Spannungen ist es vorteilhaft, wenn der Kühlmitteleinlauf und der Kühlmittelauslauf beider Elektroden an ein und derselben Stirnseite der ersten Elektrode angeordnet sind und wenn Ein- und Auslauf der zweiten Elektrode bezogen auf den Entladungsspalt senkrecht über zwischen den Elektroden liegenden Abstandstücken und in gleichem Abstand von der Stirnseite der zweiten Elektrode von der ersten zur zweiten Elektrode geführt sind.

Eine gleichmäßige Kühlung des Lasergases wird erreicht, indem beide Elektroden Kühlkanäle enthalten, indem die Kühlkanäle der beiden Elektroden gleiche Abstände zum Entladungsspalt aufweisen. Dabei besitzen die Kühlkanäle beider Elektroden vorteilhaft denselben Querschnitt. Eine besonders geringe Verformung bei Temperaturschwankungen tritt auf, wenn die Kühlkanäle bezogen auf den Entladungsspalt spiegelsymmetrisch angeordnet sind.

Ein vorteilhaftes Verfahren zur Herstellung eines Slab- oder Bandleiterlasers gemäß der Erfindung weist die Merkmale auf, daß Spiegel verwendet werden, die je eine zylinderförmige Reflexionsfläche aufweisen, daß eine Verbindungsfläche jedes Spiegels zur Achse der Reflexionsfläche mit hoher Genauigkeit senkrecht stehend gestaltet wird, daß die Verbindungsfläche auf die erste Elektrode aufgesetzt wird, daß durch Schwenkung des Spiegels gegenüber der ersten Elektrode dessen Brennpunkt auf die gewünschte Strahlrichtung und die gewünschte Lage auf der Elektrode einjustiert wird und daß dann eine bleibende Fixierung des Spiegels auf der Elektrode vorgenommen wird. Dabei wird vorteilhaft jeder Spiegel mittels eines Laserstrahls, der die gewünschte Strahlrichtung und die gewünschte Lage des Strahles auf der ersten Elektrode anzeigt, justiert.

Die Erfindung wird nun anhand von drei Figuren näher erläutert. Sie ist nicht auf die in den Figuren gezeigten Beispiele beschränkt.
- FIG 1: zeigt den Aufbau eines erfindungsgemäßen Bandleiterlasers und veranschlaulicht das beanspruchte Justierverfahren,
- FIG 2: zeigt einen erfindungsgemäßen Bandleiterlaser in teilweise geschnittener und gebrochener Ansicht.
- FIG 3: zeigt einen Schnitt durch einen Laser nach FIG 2.

Auf eine erste Elektrode 1, die formstabil ausgeführt ist, sind Resonatorspiegel 2 und 3 aufgesetzt. Die Resonatorspiegel 2 und 3 besitzen zylindrische Oberflächen 4 und 5, von denen die zylindrische Oberfläche 4 des Resonatorspiegels 2 konkav und die zylindrische Oberfläche 5 des Resonatorspiegels 3 konvex gewölbt ist. Die beiden Zylinderflächen 4 und 5 besitzen nicht dargestellte Achsen, die auf Verbindungsflächen 6 bzw. 7 der Spiegel 2 bzw. 3 mit hoher Genauigkeit senkrecht stehen. Die Abweichung von der Rechtwinkeligkeit beträgt beispielsweise nur etwa 10'' (=Winkelsekunden). Diese hohe Genauigkeit ist bei einer Tiefe T des Spiegels von beispielsweise 10mm erreichbar.

Die erste Elektrode 1 trägt eine zweite Elektrode 26 über Abstandsstücke 25, die aus Isoliermaterial,insbesondere Keramik, bestehen. Die Elektrode 26 läßt zu den Spiegeln 2 und 3 Isolierspalte 8 frei.Die Isolierspalte 8 sind möglichst klein gehalten, um Streuverluste zu vermeiden. Bei den praktisch eingesetzten Radiuswerten der Spiegel von mehreren Metern ist die Krümmung der Spiegeloberflächen so gering, daß in vielen Fällen eine Quaderform der zweiten Elektrode 26 ausreicht, um Laser hoher Leistung zu erzeugen. Nötigenfalls kann die Elektrodenform auch an die Form der Spiegel angepaßt sein.

Eine Justiermöglichkeit für die Spiegel ist vor dem Aufsetzen der z.B. durch Schrauben 28 fixierten zweiten Elektrode 26 und vor dem endgültigen Befestigen der Spiegel gegeben. Hierzu können bekannte Interferometer eingesetzt werden. Dabei wird z.B. der Spiegel 3 in Richtung A bzw. A' geschwenkt. Die Spiegel 2, 3 werden nach der Justierung endgültig fixiert. Der Spiegel 2 wird beispielsweise aufgeklebt oder aufgelötet. Der Spiegel 3 wird durch eine Halteeinrichtung, die hier aus zwei Schrauben besteht, nach dem Justieren festgeklemmt und so in seiner Lage gehalten. Dabei reichen die üblichen Toleranzen für die Justierung aus.

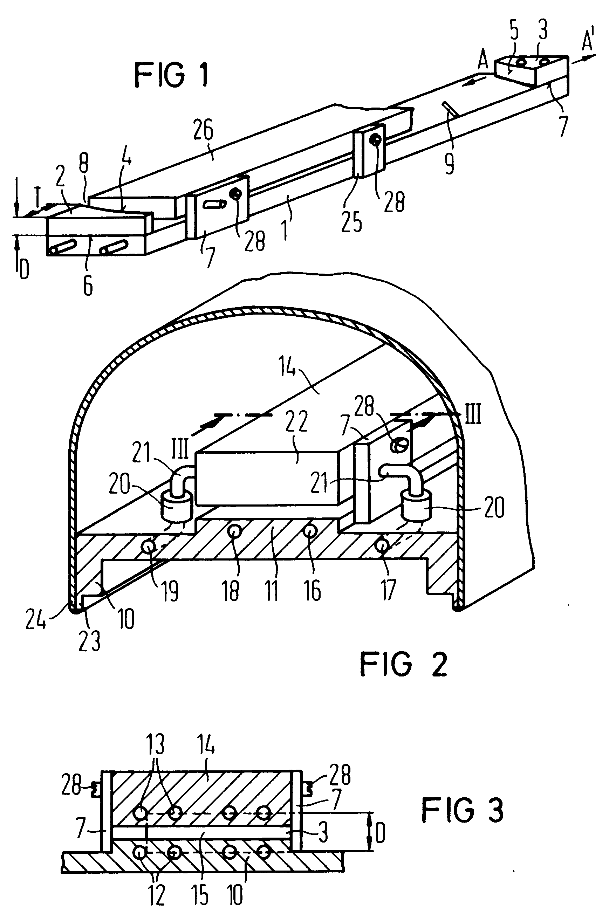

Im Ausführungsbeispiel der FIG 2 und FIG 3 weist die erste Elektrode 10 im wesentlichen einen U-Querschnitt auf. Der an die Symmetrieebene angrenzende Bereich 11 des U-Profiles besitzt eine Erhebung an der Außenwand der U-Form. Im Bereich dieser Erhebung sind Kühlkanäle 12 untergebracht. Kühlkanäle 13 mit gleichem Querschnitt sind in der zweiten Elektrode 14 untergebracht und zu den Kühlkanälen 12 in der ersten Elektrode 10 bezogen auf den Entladungsspalt 15 spiegelsymmetrisch angeordnet. Abstandsstücke 7 bestimmen den Abstand zwischen den Elektroden 10 und 14. Die Abstandstücke 7 bestehen aus Isolierstoff, insbesondere Keramik. Der Spiegel 3 steht geringfügig seitlich über die Elektroden 10 bzw. 14 vor und weist eine Dicke D auf, die größer ist die Dicke des Entladungsspaltes 15.

Kühlmitteleinläufe 16 und 17 sind auf einer Seite der Symmetrieebene der Elektrode 10 angeordnet, während die Kühlmittelausläufe 18 bzw. 19 der ersten Elektrode 10 bzw. der zweiten Elektrode 14 auf der anderen Seite der Symmetrieebene angeordnet sind. Kühlmitteleinlauf 17 bzw. Kühlmittelauslauf 19 für die zweite Elektrode 14 verlaufen zunächst durch das U-Profil der ersten Elektrode 10 außerhalb ihrer Erhebung 11 im Bereich der Symmetrieebene. Sie verlassen über Keramikdurchführungen 20 die erste Elektrode und verlaufen über Rohrstücke 21 durch Abstandsstücke 7 in die zweite Elektrode 14. Kühlmittelein- und -auslauf liegen in der Nähe der Stirnseite 22 der zweiten Elektrode 14.

Das U-Profil der ersten Elektrode 10 weist Endbereiche 23 mit verringertem Querschnitt auf. An die Endbereiche 23 ist eine Gehäusekappe 24 angeschweißt oder angelötet, die das vakuumdichte Gehäuse des Lasers vervollständigt.

## Patentansprüche

1. Slab- oder Bandleiterlaser, der zwei Elektroden (1,26; 10,14) und zwei Resonatorspiegel (2,3) enthält, wobei die Elektroden einen Entladungsspalt (15) begrenzen und Wellenleiterflächen für die Laserstrahlung bilden und wobei die Resonatorspiegel (2,3) unmittelbar an eine erste Elektrode (1) angrenzen, **dadurch gekennzeichnet**, daß die erste Elektrode (1,10) formstabil ausgeführt ist, daß diese Elektrode die Spiegel (3,4) und die zweite Elektrode (26, 14) trägt, daß die Spiegel (3, 4) gegenüber der ersten Elektrode (1) justiert und auf ihr mechanisch fest verankert sind.

2. Slab- oder Bandleiterlaser nach Anspruch 1, **dadurch** **gekennzeichnet**, daß zumindest ein Spiegel auf die erste Elektrode aufgeklebt ist.

3. Slab- oder Bandleiterlaser nach einem der Ansprüche 1 oder 2, **dadurch gekennzeichnet**, daß zumindest ein Spiegel auf die erste Elektrode durch eine Halteeinrichtung festgeklemmt ist.

4. Slab- oder Bandleiterlaser nach einem der Ansprüche 1 bis 3, **dadurch gekennzeichnet**, daß zumindest ein Spiegel auf die erste Elektrode aufgelötet ist.

5. Slab- oder Bandleiterlaser nach einem der Ansprüche 1 bis 4, **dadurch gekennzeichnet**, daß die erste Elektrode im wesentlichen den Querschnitt eines U-Profils besitzt, daß der an die Symmetrieebene angrenzende Teil des U-Profils eine Erhebung an der Außenwand der U-Form bildet, daß im Bereich dieser Erhebung Kühlkanäle untergebracht sind und daß außerhalb der Kühlkanäle im Bereich der Stirnseite des Lasers Anschlüsse für das zur Kühlung der zweiten Elektrode bestimmte Kühlmittel angeordnet sind.

6. Slab- oder Bandleiterlaser nach einem der Ansprüche 1 bis 5, **dadurch gekennzeichnet**, daß die Kühlmitteleinläufe für beide Elektroden auf einer Seite und die Kühlmittelausläufe für beide Elektroden auf der anderen Seite der Symmetrieebene des U-Profiles angeordnet sind.

7. Slab- oder Bandleiterlaser nach einem der Ansprüche 1 bis 6, **dadurch gekennzeichnet**, daß die zweite Elektrode mit der ersten über Abstandsstücke aus Isolierstoff mechanisch fest verbunden und im gewünschten Abstand gehalten ist, daß die erste Elektrode in Strahlrichtung des Lasers länger ausgebildet ist als die zweite Elektrode, daß die Spiegel in Strahlrichtung außerhalb der zweiten Elektrode und von ihr elektrisch isoliert auf der ersten Elektrode angeordnet sind, daß die Spiegel aus Metall bestehen und dicker ausgebildet sind, als die Spaltbreite des Entladungsspaltes.

8. Slab- oder Bandleiterlaser nach Anspruch 7, **dadurch** **gekennzeichnet**, daß die Spaltbreite unter 2mm und die Dicke der Spiegel zumindest etwa 5mm beträgt und daß die Spiegel aus reinem Kupfer bestehen.

9. Slab- oder Bandleiterlaser nach einem der Ansprüche 1 bis 8, **dadurch gekennzeichnet**, daß das Flächenträgheitsmoment der beiden Elektroden bezogen auf den Entladungsspalt gleich groß ist und daß der Abstand der Kühlkanäle von der dem Entladungsspalt zugewandten Fläche jeder Elektrode gleich groß ist.

10. Slab- oder Bandleiterlaser nach Anspruch 5, **dadurch** **gekennzeichnet**, daß der Kühlmitteleinlauf und der Kühlmittelauslauf beider Elektroden an ein und derselben Stirnseite der ersten Elektrode angeordnet sind und daß Ein- und Auslauf der zweiten Elektrode bezogen auf den Entladungsspalt senkrecht über zwischen den Elektroden liegenden Abstandsstücken und in gleichem Abstand von der Stirnseite der zweiten Elektrode von der ersten zur zweiten Elektrode geführt sind.

11. Slab- oder Bandleiterlaser nach Anspruch 5, **dadurch** **gekennzeichnet**, daß die Schenkel des U-Profils Endbereiche mit verringertem Querschnitt aufweisen und daß diese Endbereiche mit einer Gehäusehaube vakuumdicht verschweißt oder verlötet sind.

12. Slab- oder Bandleiterlaser nach einem der Ansprüche 1 bis 11, **dadurch gekennzeichnet**, daß beide Elektroden Kühlkanäle enthalten, daß die Kühlkanäle der beiden Elektroden gleiche Abstände zum Entladungsspalt aufweisen.

13. Slab- oder Bandleiterlaser nach einem der Ansprüche 1 bis 12, **dadurch gekennzeichnet**, daß beide Elektroden Kühlkanäle enthalten, und daß die Kühlkanäle beider Elektroden denselben Querschnitt besitzen.

14. Slab- oder Bandleiterlaser nach einem der Ansprüche 12 oder 13, **dadurch gekennzeichnet**, daß die Kühlkanäle bezogen auf den Entladungsspalt spiegelsymmetrisch angeordnet sind.

15. Slab- oder Bandleiterlaser nach einem der Ansprüche 1 bis 14, **dadurch gekennzeichnet**, daß die Elektrodenform an die Form der Oberfläche der Spiegel angepaßt ist, so daß ein Spalt gleicher Spaltbreite zwischen Elektrode und Spiegel freibleibt.

16. Verfahren zur Herstellung eines Slab- oder Bandleiterlasers nach einem der Ansprüche 1 bis 15, **dadurch gekennzeichnet**, daß Spiegel verwendet werden, die je eine zylinderförmige Reflexionsfläche aufweisen, daß eine Verbindungsfläche jedes Spiegels zur Achse der Reflexionsfläche mit hoher Genauigkeit senkrecht stehend gestaltet wird,daß die Verbindungsfläche auf die erste Elektrode aufgesetzt wird, daß durch Schwenkung des Spiegels gegenüber der ersten Elektrode dessen Brennpunkt auf die gewünschte Strahlrichtung und die gewünschte Lage auf der Elektrode einjustiert wird und daß dann eine bleibende Fixierung des Spiegels auf der Elektrode vorgenommen wird.

17. Verfahren nach Anspruch 16, **dadurch gekennzeichnet**, daß jeder Spiegel mittels eines Laserstrahles, der die gewünschte Strahlrichtung und die gewünschte Lage des Strahles auf der ersten Elektrode anzeigt, justiert wird.

## Claims

1. Slab or stripline laser, which includes two electrodes (1, 26; 10, 14) and two resonator mirrors (2, 3), the electrodes defining a discharge gap (15) and forming waveguide surfaces for the laser radiation and the resonator mirrors (2, 3) immediately adjoining a first electrode (1) characterized in that the first electrode (1, 10) is designed to be shape-stable, in that this electrode carries the mirrors (3, 4) and the second electrode (26, 14), and in that the mirrors (3, 4) are adjusted relative to the first electrode (1) and are mechanically firmly anchored on the latter.

2. Slab or stripline laser according to Claim 1, characterized in that at least one mirror is adhesively bonded onto the first electrode.

3. Slab or stripline laser according to one of Claims 1 or 2, characterized in that at least one mirror is clamped fast onto the first electrode by a retaining device.

4. Slab or stripline laser according to one of Claims 1 to 3, characterized in that at least one mirror is soldered onto the first electrode.

5. Slab or stripline laser according to one of Claims 1 to 4, characterized in that the first electrode possesses substantially the cross-section of a U profile, in that that part of the U profile which adjoins the plane of symmetry forms an elevation on the outer wall of the U shape, in that cooling channels are accommodated in the region of this elevation, and in that connections for the coolant intended to cool the second electrode are disposed outside the cooling channels in the region of the end face of the laser.

6. Slab or stripline laser according to one of Claims 1 to 5, characterized in that the coolant inlets for both electrodes are disposed on one side and the coolant outlets for both electrodes are disposed on the other side of the plane of symmetry of the U profile.

7. Slab or stripline laser according to one of Claims 1 to 6, characterized in that the second electrode is mechanically firmly connected to the first via spacers of insulating material and is held at the desired spacing, in that the first electrode is designed to be longer than the second electrode in the beam direction of the laser, in that the mirrors are disposed on the first electrode in the beam direction outside the second electrode and electrically insulated therefrom, and in that the mirrors comprise metal and are designed to be thicker than the gap width of the discharge gap.

8. Slab or stripline laser according to Claim 7, characterized in that the gap width is less than 2 mm and the thickness of the mirrors is at least approximately 5 mm, and in that the mirrors comprise pure copper.

9. Slab or stripline laser according to one of Claims 1 to 8, characterized in that the second moment of inertia of the two electrodes is of the same magnitude with reference to the discharge gap, and in that the spacing of the cooling channels from that surface of each electrode which faces the discharge gap is of the same magnitude.

10. Slab or stripline laser according to Claim 5, characterized in that the coolant inlet and the coolant outlet of both electrodes are disposed on one and the same end face of the first electrode, and in that inlet and outlet of the second electrode are guided, with reference to the discharge gap, vertically over spacers lying between the electrodes and are guided from the first to the second electrode at the same spacing from the end face of the second electrode.

11. Slab or stripline laser according to Claim 5, characterized in that the legs of the U profile exhibit end regions of reduced cross-section, and in that these end regions are welded or soldered vacuum-tight to a housing hood.

12. Slab or stripline laser according to one of Claims 1 to 11, characterized in that the two electrodes include cooling channels, and in that the cooling channels of the two electrodes exhibit equal spacings from the discharge gap.

13. Slab or stripline laser according to one of Claims 1 to 12, characterized in that the two electrodes include cooling channels, and in that the cooling channels of the two electrodes possess the same cross-section.

14. Slab or stripline laser according to one of Claims 12 or 13, characterized in that the cooling channels are disposed with mirror symmetry with reference to the discharge gap.

15. Slab or stripline laser according to one of Claims 1 to 14, characterized in that the electrode shape is adapted to the shape of the surface of the mirrors, so that a gap of constant gap width remains free between electrode and mirror.

16. Method for manufacturing a slab or stripline laser according to one of Claims 1 to 15, characterized in that mirrors are used which exhibit in each instance a cylindrical reflecting surface, in that a connecting surface of each mirror is fashioned standing vertically relative to the axis of the reflecting surface with high precision, in that the connecting surface is fitted onto the first electrode, in that by pivoting the mirror relative to the first electrode the focal spot of the mirror is set to the desired beam direction and the desired position on the electrode, and in that a permanent fixing of the mirror on the electrode is then undertaken.

17. Method according to Claim 16, characterized in that each mirror is adjusted by means of a laser beam which indicates the desired beam direction and the desired position of the beam on the first electrode.

## Revendications

1. Laser à guide d'ondes en forme de slab ou de bande, qui comporte deux électrodes (1,26;10,14) et deux miroirs de résonateur (2,3), dans lequel les électrodes délimitent une intervalle de décharge (15) et des surfaces formant guides d'ondes pour le rayonnement laser, et dans lequel les miroirs (2,3) du résonateur jouxtent directement une première électrode (1), caractérisé par le fait que la première électrode (1,10) a une forme stable, que cette électrode porte les miroirs (3,4) et la seconde électrode (26,14) et que les miroirs (3,4) sont reglés par rapport à la première électrode (1) et sont ancrés solidement du point de vue mécanique sur cette électrode.

2. Laser à guide d'ondes en forme de slab ou de bande, caractérisé par le fait qu'au moins un miroir est collé sur la première électrode.

3. Laser à guide d'ondes en forme de slab ou de bande suivant l'une des revendications 1 ou 2, caractérisé par le fait qu'au moins un miroir est bloqué fermement sur la première électrode par un dispositif de maintien.

4. Laser à guide d'ondes en forme de slab ou de bande suivant l'une des revendications 1 à 3, caractérisé par le fait qu'au moins un miroir est fixé par brasage sur la première électrode.

5. Laser à guide d'ondes en forme de slab ou de bande suivant l'une des revendications 1 à 4, caractérisé par le fait que la première électrode possède essentiellement la section transversale d'un profilé en U, que la partie, qui jouxte le plan de symétrie, du profilé en U forme une partie surélévation sur la paroi extérieure de la forme en U, que des canaux de refroidissement sont logés dans la zone de cette surélévation et que des raccords pour le fluide de refroidissement destiné à refroidir la seconde électrode sont disposés à l'extérieur des canaux de refroidissement dans la zone de la face frontale du laser.

6. Laser à guide d'ondes en forme de slab ou de bande suivant l'une des revendications 1 à 5, caractérisé par le fait que les entrées du fluide de refroidissement pour les deux électrodes sont disposées d'un côté du plan de symétrie du profilé en U et que les sorties du fluide de refroidissement pour les deux électrodes sont disposées de l'autre côté de ce plan.

7. Laser à guide d'ondes en forme de slab ou de bande suivant l'une des revendications 1 à 6, caractérisé par le fait que la seconde électrode est reliée solidement du point de vue mécanique à la première électrode et est maintenue à la distance désirée de cette électrode par l'intermédiaire d'entretoises en matériau isolant, que la première électrode est plus longue que la seconde électrode dans la direction du faisceau du laser, que les miroirs sont disposés, à l'extérieur de la seconde électrode dans la direction du faisceau et en en étant isolés du point de vue électrique, sur la première électrode que les miroirs sont en métal et ont une épaisseur supérieure à la largeur de l'intervalle de décharge.

8. Laser à guide d'ondes en forme de slab ou de bande suivant la revendication 7, caractérisé par le fait que la largeur de la fente est inférieure à 2 mm et que l'épaisseur des miroirs est égale à au moins environ 5 mm et que les miroirs sont en cuivre pur.

9. Laser à guide d'ondes en forme de slab ou de bande suivant l'une des revendications 1 à 8, caractérisé par le fait que le moment d'inertie de surface des deux électrodes, par rapport à l'intervalle de décharge, est identique et que la distance,des canaux de refroidissement à la surface de chaque électrode tournée vers l'intervalle de décharge, est la même.

10. Laser à guide d'ondes en forme de slab ou de bande suivant la revendication 5, caractérisé par le fait que l'entrée du fluide de refroidissement et la sortie du fluide de refroidissement des deux électrodes sont disposées sur une seule et même face frontale de la première électrode, et que l'entrée et la sortie de la seconde électrode passent, perpendiculairement à l'intervalle de décharge, à travers les entretoises entre les électrodes et à une même distance de la face frontale de la seconde électrode, de la première à la seconde électrode.

11. Laser à guide d'ondes en forme de slab ou de bande suivant la revendication 5, caractérisé par le fait que les branches du profilé en U possèdent des sections d'extrémité ayant une section transversale réduite et que ces zones d'extrémité sont fixées par soudage ou brasage à un capot du boîtier, d'une manière étanche au vide.

12. Laser à guide d'ondes en forme de slab ou de bande suivant l'une des revendications 1 à 11, caractérisé par le fait que les deux électrodes comportent des canaux de refroidissement, et que les canaux de refroidissement des deux électrodes sont situés à des distances identiques de l'intervalle de décharge.

13. Laser à guide d'ondes en forme de slab ou de bande suivant l'une des revendications 1 à 12, caractérisé par le fait que les deux électrodes comportent des canaux de refroidissement et que les canaux de refroidissement des deux électrodes ont la même section transversale.

14. Laser à guide d'ondes en forme de slab ou de bande suivant l'une des revendications 12 ou 13, caractérisé par le fait que les canaux de refroidissement sont disposés symétriquement par rapport à l'intervalle de décharge.

15. Laser à guide d'ondes en forme de slab ou de bande suivant l'une des revendications 1 à 14, caractérisé par le fait que la forme des électrodes est adaptée à la forme de la surface des miroirs de manière à former une intervalle de même largeur entre une électrode et un miroir.

16. Procédé de fabrication d'un laser à guide d'ondes en forme de slab ou de bande suivant l'une des revendications 1 à 15, caractérisé par le fait qu'on utilise des miroirs qui possèdent respectivement une surface réfléchissante de forme cylindrique, on dispose verticalement avec une grande précision une surface de raccordement de chaque miroir à l'axe de la surface réfléchissante, on pose la surface de raccordement sur la première électrode, on règle en faisant basculer le miroir par rapport à la première électrode, son foyer sur la direction souhaitée pour le faisceau et en la position souhaitée sur l'électrode et on réalise ensuite une fixation permanente du miroir sur l'électrode.

17. Procédé suivant la revendication 16, caractérisé par le fait que chaque miroir est réglé au moyen d'un faisceau laser, qui indique la direction souhaitée pour le faisceau et la position souhaitée du faisceau sur la première électrode.
